# EUROPÄISCHE PATENTANMELDUNG

(11) **EP 2 163 654 A2**
(43) Veröffentlichungstag der Anmeldung: **17.03.2010**
(21) Anmeldenummer: 09075405.2
(22) Anmeldetag: 31.08.2009
(51) Int. Cl.: C21C 5/38, C21C 5/48, C21C 7/00, C22B 7/02, C22B 19/30, F27D 3/00

(54) **Verfahren zur Rückführung von bei metallurgischen Verfahren anfallenden Stäuben und/oder festen staubförmigen Nebenprodukten**

(30) Priorität: 16.09.2008 DE 102008048232
(71) Anmelder: SMS Siemag Aktiengesellschaft, 40237 Düsseldorf (DE)
(72) Erfinder: Falkenreck, Udo, 44797 Bochum (DE); Schlüter, Jochen, 44265 Dortmund (DE); Weischedel, Walter, Dr., 40670 Meerbusch (DE)
(74) Vertreter: Klüppel, Walter

(57) **Zusammenfassung**

Die Erfindung betrifft ein Verfahren sowie eine Anlage zur Rückführung von bei metallurgischen Verfahren, insbesondere bei der Stahlherstellung, anfallenden Stäuben und /oder festen staubförmigen Nebenprodukten.

Dabei wird der Staub mechanisch unterhalb der Oberfläche der in dem metallurgischen Gefäß befindlichen Schlacke oder Schmelze in diese eingeleitet.

## Beschreibung

Die Erfindung betrifft ein Verfahren zur Rückführung von bei metallurgischen Verfahren, insbesondere bei der Stahlherstellung, anfallenden Stäuben und /oder festen staubförmigen Nebenprodukten, sowie eine Anlage zur Durchführung des Verfahrens.

Die metallurgische Verwertung von Stäuben ist in der Stahlindustrie bekannt.
Diese Stäube fallen aufgrund der umfangreichen Maßnahmen zur Reinigung der Abgase bei metallurgischen Prozessen an, wobei das Endziel in der Reinhaltung der Luft zu sehen ist.

Die staubförmige Konsistenz macht allerdings die Handhabung schwierig.
Man ist daher verstärkt dazu übergegangen, möglichst ohne eine Umwandlung bzw. Nachbesserung in ein oder mehreren Prozessstufen die Stäube einer direkten Verwertung zuzuführen, d. h. vorrangig werden die Stäube somit dem Aggregat zugeführt, bei dem sie vorher angefallen sind.

So ist es beispielsweise aus der WO 01/55460 A1 oder der DE 199 20 209 A1 bekannt, die Stäube auf oder in ein Bad aus flüssigen Metallen und flüssige Schlacke auf - oder einzublasen.

Die Schmelze kann sich dabei in einem Konverter befinden, wobei das Einblasen oder die Förderung der Stäube in den Konverter mittels eines Gases, also pneumatisch, erfolgt. Hierzu sind Lanzen oder Düsenanordnungen in der Wand des Konverters vorgesehen.

Wird der Staub pneumatisch auf das Bad oder die Schmelze aufgeblasen, so kann allerdings nicht verhindert werden, dass ein Teil des eingeblasenen Staubes wegen der geringen Partikelgröße wieder im Abgas ausgetragen wird, da kein Eindringen in die Schmelze stattgefunden hat.

Wenn eine Zwischenbearbeitung erfolgt, so verursacht dies erhebliche Aufarbeitungs- oder Verarbeitungs- sowie hohe Transportkosten.

Der direkte Einsatz des Staubes durch Einblasen des Staubes mit Hilfe von Lanzen im Aggregat, das diesen Staub erzeugt hat z. B.
einem Elektrolichtbogenofen, , wird durch eine schlechte Erreichbarkeit des Metallbades und deshalb eine schlechte Separierung der Komponenten des Staubes unvorteilhaft. Deshalb wird der Staub mehrmals durch die Lanzen in das LBO Gefäß eingebracht., bis der Staub einen Grenzwert an beispielsweise Zink Gehalt erreicht hat.

Die Aufgabe der Erfindung besteht daher, eine effektivere Nutzung von Stäuben durch Separieren der Komponenten mit dem Ziel der Gewinnung dieser Komponenten zu erreichen. Der Einsatz des Staubes soll dabei in dem Aggregat erfolgen, das diesen verursacht hat.

Gelöst wird diese Aufgabe erfindungsgemäß mit einem Verfahren zur Rückführung von bei metallurgischen Verfahren, insbesondere bei der Stahlherstellung, anfallenden Stäuben und
/oder festen staubförmigen Nebenprodukten, das dadurch gekennzeichnet ist,
dass der Staub mechanisch unterhalb der Oberfläche der in dem metallurgischen Gefäß befindlichen Schmelze eingeleitet wird.

Der Kerngedanke der Erfindung besteht darin, dass die Zugabe des Staubes in einem Dichtstrom ohne Verwendung von Fördergas direkt in das Schlacken- oder Metallbad erfolgt. Zu diesem Zweck wird der Staub vorzugsweise durch einen Schneckenförderer oder eine ähnliche Einrichtung zu dem Gefäß des Aggregates transportiert, das den Staub verursacht hat, und in dieses eingeleitet.

Dabei kann dies durch einen Kanal in der Wand des Gefäßes erfolgen, wobei das Einbringen in die Schlackenphase oder in das Metallbad unter der Grenze Metall-Schlacke erfolgt.

Die Vorteile des erfindungsgemäßen Verfahrens und der dazu vorgeschlagenen Anlage bestehen in
- der Vermeidung von Deponieabfall.
- der effektiven Wiedergewinnung von einzelnen Komponenten des Staubes,
- der Vermeidung von sekundärem Austragen des eingeblasenen Staubes mit dem Abgas,
- dem schnelleren und effektiveren Erreichen des Zinkgehaltes des Staubes für eine wirtschaftliche Verarbeitung zur Zinkgewinnung,
- der Minderung der Transportkosten des Staubes,
- der Verbesserung des Eisenausbringens und schließlich
- in dem Erhalt des Kanals in der Gefäßwand, wenn der zugegebene Staub gleichzeitig als Kühlmittel für diesen dient.

Die Zugabe des Staubes verläuft kontinuierlich und beginnt dann, wenn das Bad die Oberkante der Eintrittsöffnung des Kanals in das Aggregat erreicht hat und endet vor dem Abstich.

Sehr vorteilhaft ist es, wenn kurz vor dem Abstich die zugeförderte Menge an Staub für eine kurze Zeit schlagartig erhöht wird, weil dies einen Schutz der Austrittsöffnung gewährleistet.

## Patentansprüche

1. Verfahren zur Rückführung von bei metallurgischen Verfahren, insbesondere bei der Stahlherstellung, anfallenden Stäuben und /oder festen staubförmigen Nebenprodukten,
**dadurch gekennzeichnet,**
**dass** der Staub mechanisch unterhalb der Oberfläche der in dem metallurgischen Gefäß befindlichen Schlacke oder Schmelze in diese eingeleitet wird.

2. Verfahren nach Anspruch 1,
**dadurch gekennzeichnet,**
**dass** die Stäube während des metallurgischen Prozesses durch die Wand des Gefäßes des Aggregates kontinuierlich unter die Oberfläche der Schlacke oder des flüssigen Bades mit einer feinen Körnung auf nicht pneumatischem Wege in einem Dichtstrom eingebracht werden.

3. Verfahren nach Anspruch 1 und 2,
**dadurch gekennzeichnet,**
**dass** die Zugabe des Staubes dann beginnt, wenn das Bad die Oberkante der Eintrittsöffnung für den Staub erreicht hat und vor dem Abstich endet.

4. Verfahren nach einem der vorstehenden Ansprüche,
**dadurch gekennzeichnet,**
**dass** kurz vor dem Abstich die geförderte Menge für eine kurze Zeit schlagartig erhöht wird, um einen Schutz der Eintrittsöffnung zu gewährleisten.

5. Verfahren nach einem der vorstehenden Ansprüche,
**dadurch gekennzeichnet,**
**dass** die Menge des zugegebenen Staubes dem Wärmeangebot um die Eintrittsöffnung angepasst wird.

6. Anlage zur Durchführung des Verfahrens nach einem der vorstehenden Ansprüche,
**dadurch gekennzeichnet,**
**dass** in der Wandung eines metallurgischen Aggregates eine mit einem Zuführungskanal verbundene Eintrittsöffnung für die Zuführung von Stäuben vorgesehen ist.

7. Anlage nach Anspruch 6,
**dadurch gekennzeichnet,**
**dass** in dem Zuführungskanal ein Schneckenförderer angeordnet ist.

8. Anlage nach einem der vorstehenden Ansprüche,
**dadurch gekennzeichnet,**
**dass** der Durchmesser des Zuführungskanals größer als die mittlere Körnung des Staubes ist.

9. Anlage nach einem der vorstehenden Ansprüche,
**dadurch gekennzeichnet,**
**dass** die Eintrittsöffnung für die Stäube in das Aggregat in der Wandung dieses in einer Höhe angeordnet ist, die unter dem höchst möglichen Stand des Metallbades im Aggregat liegt.

10. Anlage nach einem der vorstehenden Ansprüche,
**dadurch gekennzeichnet,**
**dass** die Zuführung der Stäube in dem Aggregat durch ein selbstverzehrendes Rohr erfolgt.
